# EUROPEAN PATENT APPLICATION

(11) **EP 3 889 810 A1**
(43) Date of publication of application: **06.10.2021**
(21) Application number: 21156688.0
(22) Date of filing: 11.02.2021
(51) Int. Cl.: G06F 21/16, G06F 21/10

(54) **SYSTEM AND METHOD FOR THE DETECTION OF WEBSITE CONTENT THEFT**

(30) Priority: 03.04.2020 US 202016839387
(71) Applicant: MAKE GREAT SALES LIMITED, 402-6 HENNESSY ROAD (HK)
(72) Inventor: CRAN, Bruce Peter, Wanchai (HK)
(74) Representative: White, Andrew John

(57) **Abstract**

A system and method may detect the copying of all or part of a webpage or website and may report the ripping and an identification related to a processor that runs the ripped website content. A database of copying events, including the identification of processors involved in running copied content, may be established and maintained. Alerts to the copying may be transmitted to a plurality of processors.

## Description

### FIELD OF INTEREST

The present inventive concepts relate to the field of website development and, more particularly, to the detection of content ripping from a website.

### BACKGROUND

The Webby is an award for excellence on the Internet, presented annually by the International Academy of Digital Arts and Sciences. For a lucky few, creativity, artistry, and hard work may be rewarded with such a distinguished honor. However, there are many, many, developers who work just as assiduously, who pour their creative souls into their work and who sacrifice time and money for their vocation, but who do not receive the accolades of the Academy. Even those who labor on more straightforward assignments devote significant time and effort to producing a good, workable, and coherent website with meaningful content. But all this effort may be for naught, if the work is copied and employed on another website.

A process for digitally extracting content from websites is referred to as "ripping." Such digital extraction is not *per se* illegal, but it can be when the copying or extraction is unauthorized. It would be beneficial for owners of content to detect ripping of their content so that those responsible can be held accountable and stopped.

### SUMMARY

In accordance with one aspect of the inventive concepts, provided is a method of detecting unauthorized copying and/or downloading of website content, also referred to as "ripping." According to the method, at least one processor executes computer program code to carry out the necessary functional steps of the method. The processor embeds or injects a detection mechanism within web content, e.g., a webpage or other web content file, to later determine whether the content is operating or executing in an authorized domain. The detection mechanism determines an identification of the server upon which the content is operating, if it is an authorized domain, and the detection mechanism generates an alert if the domain in which the content is operating is not the authorized domain, i.e., is an unauthorized domain. The detection mechanism is executable program code that operates automatically in response to the content being launched and/or executed by an unauthorized server and/or domain.

In example embodiments, the detection mechanism is an executable computer script injected or embedded within the content.

In example embodiments, the method includes the processor embedding an IFrame tag to include a TFrame link into the content as the detection mechanism.

In example embodiments, the method includes the processor detecting a copying of the content from the original domain and injecting a TFrame link into the copied content as the detection mechanism.

In example embodiments, the method includes detection mechanism generating an alert that includes storing an identification of the unauthorized domain and/or server running the content.

In example embodiments, the method includes the detection mechanism generating an alert that includes notifying a ripping monitor of the identification of the unauthorized domain and/or server.

In example embodiments, generating the alert includes notifying a server associated with the authorized domain of the identification of the unauthorized domain and/or server.

In example embodiments, generating the alert includes the detection mechanism emulating an image request.

In accordance with another aspect of the inventive concepts, provided is a website theft detection system, which includes at least one processor configured to include a detection mechanism within web content, e.g., a webpage or other web content file, to determine whether the content is operating in an authorized domain. The detection mechanism is configured to determine an identification of the server upon which the content is operating or hosted and to generate an alert if the operating domain is not the authorized domain, i.e., is an unauthorized domain.

In example embodiments, the detection mechanism is a script included in the content.

In example embodiments, the processor is configured to embed an IFrame tag to include a TFrame link into the content as the detection mechanism.

In example embodiments, the processor is configured to detect a copying of the content from the original domain and inject a TFrame link into the copied content as the detection mechanism.

In example embodiments, the detection mechanism is configured to generate an alert that includes an identification of the unauthorized domain and/or a server executing or hosting the copied content.

In example embodiments, the detection mechanism is configured to generate an alert to a ripping monitor of the identification of the unauthorized domain and/or server.

In example embodiments, the detection mechanism is configured to generate an alert to notify a server associated with the authorized domain of the identification of the unauthorized domain and/or server.

In example embodiments, the detection mechanism is configured to generate an alert through emulation of an image request.

In accordance with another aspect of the inventive concepts, provided is a website theft detection system that includes at least one processor configured to host the website of an authorized domain. The processor is configured to detect the copying of content from the website and inject a TFrame link comprising Javascript code into copied content. Ultimately, when the copied content is launched or processed by an unauthorized server associated with an unauthorized domain, the Javascript code is executed to generate a communication to a monitor to identify the unauthorized domain and/or server.

In example embodiments, a website theft detection system includes a processor configured to include a script within a webpage to determine whether the webpage is operating in an authorized domain. The script is configured to determine an identification of a server upon which the webpage is operating and to generate and/or send an alert if the domain in which the webpage is operating is not the authorized domain, i.e., is an unauthorized domain.

In example embodiments, the executed script is configured to electronically notify a ripping monitor of the identification of the unauthorized server and/or domain.

In example embodiments, script is configured to emulate an image request server to generate and/or send the alert.

### BRIEF DESCRIPTION OF THE DRAWINGS

The present invention will become more apparent in view of the attached drawings and accompanying detailed description. The embodiments depicted therein are provided by way of example, not by way of limitation, wherein like reference numerals refer to the same or similar elements. The drawings are not necessarily to scale, emphasis instead being placed upon illustrating aspects of the invention. In the drawings:
FIG. 1 is a block diagram of an embodiment of an architecture within which a web content theft detection system in accordance with aspects of the inventive concepts may be implemented;
FIG. 2 is a flowchart of an example embodiment of a web content theft detection process in accordance with principles of inventive concepts;
FIG.3 is a sequence diagram of an example embodiment of a web content theft detection process in accordance with principles of inventive concepts; and
FIG. 4 is a sequence diagram of an example embodiment of a web content theft detection process in accordance with principles of inventive concepts.

### DETAILED DESCRIPTION

Various aspects of the inventive concepts will be described more fully hereinafter with reference to the accompanying drawings, in which some exemplary embodiments are shown. The present inventive concept may, however, be embodied in many different forms and should not be construed as limited to the exemplary embodiments set forth herein.

It will be understood that, although the terms first, second, etc. may be used herein to describe various elements, these elements should not be limited by these terms. These terms are used to distinguish one element from another, but not to imply a required sequence of elements. For example, a first element can be termed a second element, and, similarly, a second element can be termed a first element, without departing from the scope of the present invention. As used herein, the term "and/or" includes any and all combinations of one or more of the associated listed items. The term "or" is not used in an exclusive or sense, but in an inclusive or sense.

It will be understood that when an element is referred to as being "on" or "connected" or "coupled" to another element, it can be directly on or connected or coupled to the other element or intervening elements can be present. In contrast, when an element is referred to as being "directly on" or "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements, and/or components, but do not preclude the presence or addition of one or more other features, steps, operations, elements, components, and/or groups thereof.

To the extent that functional features, operations, and/or steps are described herein, or otherwise understood to be included within various embodiments of the inventive concept, such functional features, operations, and/or steps can be embodied in functional blocks, units, modules, operations and/or methods. And to the extent that such functional blocks, units, modules, operations and/or methods include computer program code, such computer program code can be stored in a computer readable medium, e.g., such as non-transitory memory and media, that is executable by at least one computer processor. Unless otherwise indicated, process steps illustrated in example flowcharts may be executed in order(s) other than that illustrated and additional steps may be added or illustrated steps may be deleted without deviating from the spirit of inventive concepts.

In example embodiments, a system and method in accordance with principles of inventive concepts detects the theft, or "ripping," of content from a webpage, website, and/or server. The system may include, for example, a ripping monitor configured to embed, inject, or otherwise include one or more detection mechanisms into content to ultimately detect ripping of the content from a website, for example. The detection mechanism may take the form of executable program code (or a script) embedded within or injected into the ripped content. Thus, the ripped content will include the undetectable detection mechanism. The detection mechanism can be executed when the ripped content is launched, saved, executed, hosted, or otherwise processed.

In various embodiments, there are at least two approaches taken by the ripping monitor to include a detection mechanism within content available via the Web, e.g., webpages or files. The detection mechanism is not easily detectable within the content.

Under a first (embed) approach, the detection mechanism is embedded into the website content, e.g., at creation or subsequent update of the content and made available via an owner domain or other authorized domain (collectively, "owner domain"). If the content is copied, then the detection mechanism will be copied with it.

Under a second (inject) approach, functional code on the owner server/domain that hosts the website detects a copying action associated with the website content and injects the detection mechanism into the targeted content, which becomes copied content. Therefore, in various embodiments, a server from the domain of the website owner can embed or inject the detection mechanism into the content, which is preferably undetectable by the copying domain.

A domain, which can be implemented on one or more servers, that performed or initiated the ripping of the content from the owner domain can be referred to as the ripping or theft domain, which is an unauthorized domain. When the ripped website content is launched, saved, executed, hosted, or otherwise processed on or by an unauthorized domain, the detection of such an event may trigger an alert to be generated and/or corrective action to be taken by the detection mechanism within the ripped content. In various embodiments, the ripping monitor can receive and process the alerts.

In some embodiments, the alert can be sent to the original domain and/or to a monitoring system to be logged in a database, either of which can include the ripping monitor are portions thereof. The database may include records associated with the ripped content and each alert could generate and/or update a record in the database. In some embodiments, a record can include the identification of the theft domain, an owner of the theft domain, an identification of the ripped content, and a date the content was ripped and/or a date the ripped content was launched, saved, executed, hosted, or otherwise processed by the unauthorized domain. Some or all of such information may be considered theft information, which may be encrypted by the detection mechanism before sending it to the original domain and/or monitoring system. The database may be established and maintained, and may also be employed to substantiate claims against a ripping party or to identify a ripping party to a website or domain owner, to authorities, or to the larger community of users.

In example embodiments of an embed approach to theft detection, one or more servers/processors from the owner domain may employ one or more embedded inline frames (IFrames) containing a detection mechanism script (e.g., a JavaScript) to add the theft detection mechanism into the content. As will be understood by those of skill in the art, an IFrame HTML element can be used to insert content into a webpage, for example.

Using an embedded IFrame tag, a system and method in accordance with principles of inventive concepts may generate one or more unique IFrames that includes at least one TFrame. A TFrame, like a form, is a container for other components. Such IFrames with embedded TFrames are placed into the content, e.g., into a webpage, that is to be protected from ripping. The embedded TFrame will be preferably undetectable by a copier.

In example embodiments, the TFrame (within the IFrame) contains a small script that, when executed, determines whether the running domain is different from the domain of the website that is being protected. For example, the script can include an identification of the owner domain and then determine the domain of the server on which it is running. If the determined domain is not the same as the owner domain, then the script determines the domain is an unauthorized domain. In view thereof, the script can generate an electronic message, e.g., an alert message to send to the owner domain and/or a ripping monitor. The alert can take the form of an email sent to an email address defined within the detection mechanism script. The alert can include an identification of the unauthorized running domain and/or a server executing the script.

In various embodiments, the unauthorized running domain is the theft domain, i.e., the same domain that ripped the content. In other embodiments, the unauthorized running domain can be a domain that accessed the ripped content either directly or indirectly from the theft domain. Therefore, the running domain and the theft domain can be the same or different domains, and both can be unauthorized domains.

In example embodiments of an inject approach to theft detection, injecting scripts in accordance with principles of inventive concepts may involve monitoring user interactions with a protected website and detecting any form of copying of website content. Whenever a copy event is detected, the system may inject a unique IFrame, including a TFrame link, into the copied content, e.g., into a "clipboard" of the copied content, in a manner that renders it, the IFrame and/or TFrame, difficult to detect or remove. As above, the TFrame can include an executable script.

In example embodiments, when an unauthorized domain rips a webpage or other website content or when a software process crawls the website to rip content, the owner domain system hosting the website can employ a detection mechanism, e.g., in the form of executable JavaScript, that detects the copying function. In response to the copying function, the system inserts an IFrame (with TFrame link) into the copied content in a manner that is difficult to detect and/or remove. In example embodiments a system and method in accordance with principles of inventive concepts may randomly place one or more IFrames with TFrame links (which are HTML tags) among all other tags in the content being monitored and protected. Because the one or more IFrames are randomly placed in accordance with example embodiments, they are very difficult to detect or remove. As a result, they may thwart countermeasures of malefactors. Additionally, because requesting web resources in a TFrame link is a relatively simple process, involving only an image, any potential copier is unlikely to suspect or be alerted to the presence of the protective TFrames and all javascript codes for detection will executed inside of the IFrame; the potential copier will not be aware of any protective javascript code, any javascript links or Ajax calling.

As with an embedded IFrame embodiment above, the injected IFrame includes a TFrame that contains a small script that determines whether the running domain is different from the owner domain. If the running domain is different from the owner domain of the protected website, and is an unauthorized domain, the script may generate and send an alert that includes an identification of the unauthorized domain.

In either the embed or inject approach, generating the alert may include, for example, storing the identification (for example, domain name or IP address) of the unauthorized running domain within a database, sending a notification to the owner domain, operator thereof, or a monitoring system, sending a notification to a hosting service associated with the unauthorized running domain, sending a notification to a website usage monitoring system or organization, or, because an unauthorized user may not be aware that the web material had been ripped, sending a notification to the unauthorized user or owner of the unauthorized domain. In example embodiments, a call generated by the detection mechanism script to an owner domain server may employ the emulation of an image request server to disguise the call. The notification can take the form of an email, e.g., to the owner domain, a text message, or any other type of electronic message.

In example embodiments, theft-related information (for example, a ripping party's domain) may be encrypted for alerts/notifications, including notifications sent to a monitoring system or server. Rather than employing, for example, AJAX (Asynchronous JavaScript And XML) to send notifications to the monitoring server, the system emulates an image request server to send the information. In this manner, the system avoids alerting the ripping party and domain to the fact that its intrusion and theft has been detected.

The script and/or the ripping monitor can get a "fingerprint" of the theft domain. For example, determine the theft URL, obtain "WHOIS" information about the theft domain, and determine information about the server launching, saving, executing, hosting, or otherwise processing the ripped content. Such information can be stored in the database as theft information. In accordance with principles of inventive concepts, because an HTML page may be contained within an IFrame, a system and method may add and load any web resources deemed appropriate, including but not limited to: javascript files, cascading style sheet (CSS) files, Ajax calls, to address security or other issues.

As will be described in greater detail in the discussion related to the following figures, a website content theft detection system and method can be implemented on one or more processing devices, such as a one or more web servers and/or a dedicated monitoring system, as examples.

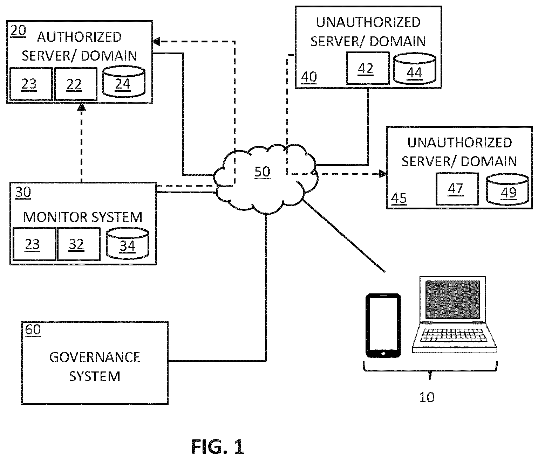

Referring FIG. 1, provided is a block diagram of an example embodiment of a web site system 20, or owner system 20, that generates and/or hosts at least one website. Owner system 20 hosts and represents an owner domain, which has rights in certain content, e.g., web content. That is, owner system 20 can host any of a number of different types of web sites, e.g., consumer or retail sites, educational, informational or news sites, travel sites, service provider sites, and/or financial sites - to name a few. Generally speaking, such web sites include content or provide access to content. Such content can include data of any of a variety of file types, e.g., html or other document files, audio files, video files, program code files, and so on. The present inventive concepts are not limited to any particular type of web site or content.

The owner system 20 is authorized to store and display the content, and can have access to other systems and data via at least one network and by any one or more of a variety of communication channels, represented generally by network cloud 50. As examples, network 50 may be or include a local area network (LAN), wide area network (WAN), virtual private network (VPN), the World Wide Web, the Internet, voice over IP (VOIP) network, a telephone or cellular telephone network, or any combination thereof. In various embodiments, the cloud 50 refers to the Internet, or all things that may be accessed through the Internet. Although, in various embodiments, all processors, servers, and systems can be interconnected through cloud 50, other connectivity, supplemental to or in substitution for cloud connectivity, is contemplated within the scope of inventive concepts.

The owner system 20 includes at least one processor 22 having access to at least one data storage device or system 24, e.g., to store and retrieve digital information (e.g., data), computer program code, and the like. That is, the processor 22 may be operably coupled to the storage system 24 and configured to execute sequences of computer program instructions to perform various processes and functions associated with the owner system 20. In various embodiments, the processor 22 can be or include a central processing unit (CPU), a general-purpose microprocessor, a bit-slice processor, a digital signal processor, a microcontroller, a graphics processing unit (GPU), or a combination thereof, as examples. The data storage systems 24 can store content provided via web site system 20, and made available via a display of a user device 10.

A plurality of different types of user devices 10 can access and communicate with the owner system 20 for a variety of reasons. The user device 10 could be, for example, a smart phone, a personal digital assistant (PDA), a computer, a laptop, a tablet, a terminal, or any other suitable electronic device, whether wired or wireless. The user device 10 could include a user interface configured to accept human inputs and provide outputs including content from the owner system 20, e.g., via a web browser. The user interface could include devices that allow user inputs through touchscreen, keyboard, trackball, joystick, microphone, camera, or other sensors or devices, as examples. The user interface may also include devices that allow output in the form of displays or audio output, as examples.

As discussed above, there may be instances where an unauthorized third-party system 40 attempts to copy (or "rip") content from web site system 20. The third-party system 40 can also include one or more processors 42 having access to one or more data storage devices or systems 44. Such data storage systems 44 can be used for storing ripped content from web site system 20. Third-party system 40 can be an external system, remote and otherwise independent from web site system 20. The third-party system 40 is associated with unauthorized domain without legitimate rights to copy, download, or display the content from web site system 20.

The third-party system 40 that ripped the content from web site system 20 could present the content itself, as a web hosting platform, or could provide the ripped content to another system 45 for unauthorized presentation. Therefore, presentation system 45 is also an unauthorized server/ domain without legitimate rights to copy, download, or display content from web site system 20. For example, presentation system 45 could be a web hosting site that presents content via a web browser to user devices 10. The ripped content could be stored in memory 49 and accessed by processor 47 of system 45, or processor 47 could access it from memory 44 of third-party system 40. In either case, the storing and/or displaying of the ripped content from web site system 20 by either of systems 40 and 45 is unauthorized and the storing and/or displaying of the ripped content amounts to theft of the ripped content.

In accordance with aspects of the inventive concepts, a ripping monitor 23 can be configured to embed and/or inject a detection mechanism into protected content and to monitor ripping of the content from web site system 20, as discussed above. The ripping monitor 23 can be embodied in program code stored in memory and executed by at least one processor. In various embodiments, the ripping monitor 23 can be implemented on the owner system 20 or an associated monitor system 30, in communication with owner system 20, or on a combination thereof. Therefore, the ripping monitor 23 can be executed on the owner system 20, the monitor system 30, or distributed across the two. The monitor system 30, if included, also includes at least one processor 32 having access to at least one data storage device or system 34 and, optionally, access to storage system 24 of owner system 20.

The processors 22 and/or 32 may be operably coupled to storage system 24 and/or 34 and configured to execute sequences of computer program instructions to perform various processes and functions associated with the ripping monitor 23, including the storing, processing, formatting, manipulation and analysis of data associated with a ripping monitor 23 and content of the owner system 20. The computer program instructions may be loaded into any one or more of the storage media depicted in storage system 24 and/or 34, or elsewhere.

The ripping monitor 23 may be developed on one processor and used on or executed by one or more other processors, such as processors 22 and/or 32. In some embodiments, multiple ripping monitors 23 can be employed or executed by a single processor. And various ripping monitors 23 can communicate with one another via any one or more types of communications channels 50, such as local area networks, wide area networks, the cloud, or short-range wireless communications, as examples.

Storage systems 24 and 34 may include any hardware, software, or firmware, or any combination thereof, configured to store data. In various embodiments, the storage systems 22 and 32 may include any of a variety of hard drives, such as hard disk drives (HDD) or solid-state drives (SSD), optical storage devices, disk storage system, a tape storage system, and/or semiconductor memories, such as, for example, random-access memory (RAM), read-only memory (ROM), flash memory, or memory card. Storage systems 24 and 34 may include any type of mass storage media configured to store information and instructions that processor 22 or 32 may need to perform processes and functions associated with a ripping monitor 23 and, optionally, with other tasks.

The ripping monitor 23 may include one or more tools for analyzing data or other information associated with messages received from the detection mechanisms within the ripped content, particularly when the ripped content is executed or execution is attempted. Accordingly, the storage system 24 and/or 34 can include data and information for use by the ripping monitor 23, and may include, in whole or in part, one or more authorized domain identifications or IP addresses or one or more unauthorized domain identifications or IP addresses, for example, reported from an embedded or injected and executed detection mechanism.

In various embodiments, database 24 and/or 34 may be configured to store data representative of the owner domain and any other authorized domain. Specifically, database 24 and/or 34 may be configured to store data and information representative of one or more unauthorized domains, such as domain names, server IP addresses, and so forth. In some embodiments, database 24 and/or 34 may include one or more fields, wherein a field may be an element of a database record in which one piece of information may be stored. In particular, a field may be configured to store an element of data representative of one or more of the unauthorized domains, ripped content, and/or IP addresses.

Owner system 20 may include or interface with one or more security systems (not shown), configured to at least partially restrict or control access to protected content of owner system 20. Security systems may include hardware, software, firmware or a combination thereof, such as, for example, a firewall, password protection software, user authentication software, encryption software and the like. In some embodiments, security systems may be configured to limit access to content for which ripping is attempted.

In some embodiments, the owner system 20 may be configured so that select data contained within storage system 24 may be inaccessible to one or more of the users 10, external systems or servers 40/45, and/or web crawlers. Owner system 20 may include a network interface system or subsystem configured to enable communication with detection mechanisms embedded or injected by the ripping monitor 23. As such, the owner system 20 may be configured to transmit or receive, or both, one or more signals related to the functions of the ripping monitor 23. A signal may include any generated and transmitted communication, such as, for example, a digital signal or an analog signal. The communication of signals across network 50 may include any wired or wireless transmission paths or combinations thereof. The ripping monitor 23 may employ the one or more networks 50, for example.

To enable communications via network 50, owner system 20 may include a set of interfaces. The set of interfaces may include a network interface, a text interface, and a voice interface, as shown in this embodiment. As mentioned above, the network 50 may represent a combination of networks configured to transmit and receive communications with owner system 20, via any of the set of interfaces.

In various embodiments, the processor 22 and/or 32 may be operably coupled to network interface for exchanging typical computer network information, e.g., via the Internet, Web, LAN, WAN, VPN or some combination thereof. The network interface may be configured to permit communication between and among the owner system 20, users 10, and the unauthorized systems 40/45, for example using an Internet protocol (IP) or other network-based protocol. In such cases, the network interface system may be configured to utilize TCP/IP, HTTP, DNS or any other application, transport, network, or link protocol, or combination of the foregoing.

In various embodiments, systems that may be associated with the ripping monitor 23 may include one or more systems configured to provide additional functions associated or useful in conjunction with a ripping monitor functionality. It is also contemplated that the ripping monitor 23 may be implemented using one or more processing systems. For example, various embodiments of a ripping monitor may include a plurality of processing systems, components of processing systems, or other systems associated with the ripping monitor.

In some embodiments, ripping system 40 (including processor 42) and unauthorized server 45 (including processor 47) may, in fact, be one and the same. That is, the processor that rips content from authorized server (owner system) 20 may also run the stolen content. In example embodiments, any of the processors, including those configured as servers, may be as illustrated in the block diagram of FIG. 1 and as described in the discussion related thereto.

Ripping server 40 may copy website content from authorized server 20 by "crawling" the Internet and copying websites that it encounters, for example. The party operating ripping server 40 may then employ the ripped contents on its own website or may sell the content to another party, the operator of unauthorized server 45, for example. That party may or may not be aware that the party operating the ripping website 40 stole all or part of the content from authorized server 20. For example, the party operating ripping server 40 may have customized the content for the party operating unauthorized website 45 and sold all or part of the content and structure of the website from authorized server 20 to the party operating unauthorized server 45 as his own creation.

User device 10 represents the processor of any of the multitude of individuals who access and employ the Internet on a daily basis. Ripping monitor 23 secures website content that runs on authorized server 20 by providing the content with a theft detection mechanism. In example embodiments, the ripping monitor 23 may reside on the same server as authorized owner system 20 or may operate from a separate rip monitor system 30, which can provide rip-protection for a plurality of authorized servers and domains. Ripping monitor 23 responds to the detection of theft by storing theft-related information in a database. Theft-related information may include the identification of the domain where stolen content is running (for example, the IP address of unauthorized server 40/45) and, if the ripping monitor 23 is monitoring and protecting a number of authorized websites, the identification of the website or domain from which the ripped content was stolen.

In example embodiments, the ripping monitor 23 may also provide alerts, or notifications, to any of a variety of people or organizations upon the detection of ripped content, i.e., from the detection mechanism within the ripped content. For example, the ripping monitor 23 may alert the operator of the authorized server 20 and/or ripping monitor system 30 so that he may take action, such as legal action, to provide restitution to the operator of the authorized server 20. The ripping monitor 23 may notify the operator of the owner domain and authorized server 20, so that he may take action directly, may notify the operator of the unauthorized server 45 (who may be unaware that the content was stolen), may notify any user through his device 10 of the theft, or may notify any web governance system 60 of the theft. Although the Internet is substantially self-governing, various bodies, for example, the Internet Governance Forum, provide some governance and control of the Internet and may be available for redress. Operators of search engines may also be included in this group, as they are also responsive to claims of copyright infringement.

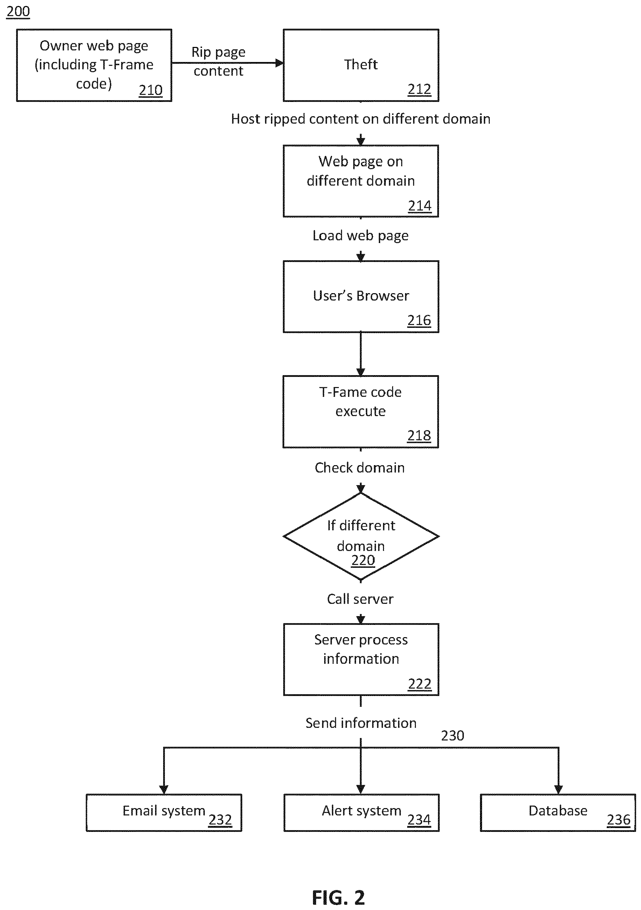

Referring to FIG. 2, a flowchart of an example embodiment of a process 200 of monitoring and notification related to the theft of website contents. In this example embodiment, content hosted on the authorized server 20 is referred to as "our web page," in step 210. The content either initialing includes one or more TFrames (embed approach) or has the TFrame injected with the copying is detected (inject approach), as previously described, and is hosted on an authorized server 20. In step 212, a malefactor (system 40) rips content from the web page, for example, by employing a software tool to crawl the webpage or by copying anything from the webpage. In step 214, the stolen material is hosted on an unauthorized server, on a domain other than that of the authorized server 40/45. When, in step 216, the content (or webpage content) is loaded to a bowser of the user's device 10, the embedded TFrame code executes, in step 218, to determine whether the page is operating in the correct domain, in step 222. If the content, e.g., a ripped webpage or portion thereof, is not operating in the proper domain, the TFrame calls a ripping monitor 23, which may be the same server as the authorized server 20 hosting the webpage or may be a separate, standalone, monitoring server 30.

In step 330, provides the ripping monitoring 23 with an identification information (theft information) related to the illicit domain hosting the stolen content. As previously indicated, the script of the TFrame system may emulate an image request server to execute the call. The ripping monitor 23 (or the TFrame script) may generate and/or send an alert or take other actions associated with the theft. The ripping monitoring 23 processes the information and forwards the information, for example, through an email system (step 232), through a dedicated alert system (step 234), and/or stores it as database entry (step 236), as illustrated. Notifications may be employed, as previously described, by a monitoring service, by the rightful owner of the webpage content, by a web governance organization, or by a user that had previously been unaware of the origins of the content, for example.

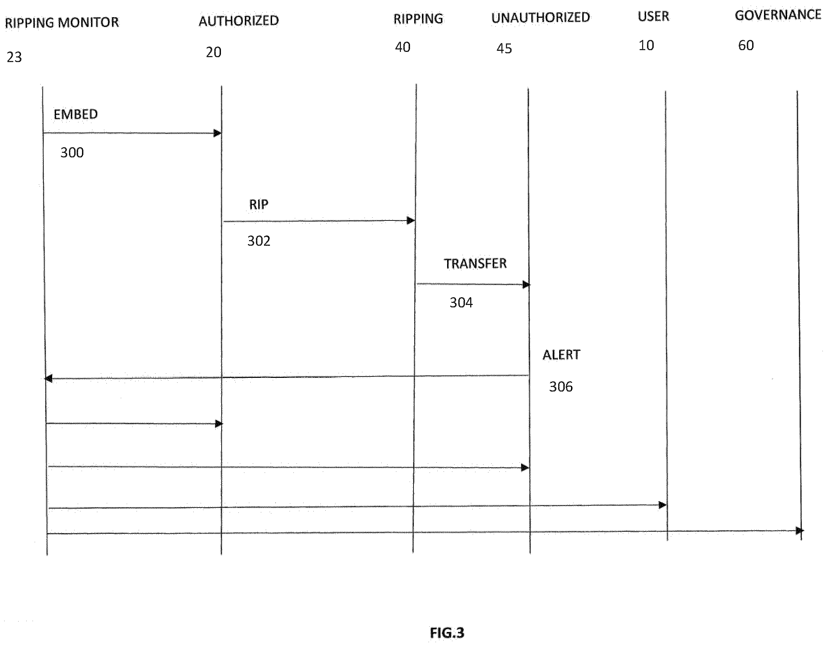

Referring to FIG. 3, provided is a sequential diagram of as an illustration of an example process in accordance with principles of inventive concepts in which a ripping monitor 23 employs the mechanism of embedding an IFrame within a web page in order to detect the theft of website contents. By "contents" we refer to any element of the website, including graphical, textual, layout, links, executable code, scripts, etc. As previously indicated, the rip monitoring process may be carried out by a separate ripping monitor processor, such as processor 40, or may be implemented upon the same, authorized, server that hosts the website, for example.

As indicated by the sequence diagram, the process begins at 300 with an IFrame being embedded within the website that is running on the authorized server 20. Again, the IFrame may be embedded by a remote ripping monitor 23 (as illustrated) or may be embedded by authorized server 20. When a ripping processor 40 rips content 302 from the website, by crawling for example, the content may be run 304 on ripping processor 40 or another, unauthorized processor 45 (as illustrated). The ripped contents may be modified (for example, customized for operation on unauthorized processor 45) or not and the party operating unauthorized processor may or may not be aware of the contents' illicit origins.

The embedded one or more IFrame links include small scripts that determine whether the currently running domain is the domain of the authorized server. In this example embodiment, when unauthorized processor 40/45 runs the content, the script of the one or more IFrame links within the ripped content determines whether the currently running domain is different from that of the authorized server and, if so, sends an alert or notification 3006 that includes the domain ID of the server upon which the ripped content is running. The domain associated with a processor that rips all or part of a website may be referred to herein as a ripping website domain 40, as an unauthorized domain. As discussed above, the domain associated with a processor that runs ripped content may also be referred to herein as the unauthorized domain 40/45 and may, or may not, be the same domain as the ripping website domain 40. The alert may include, for example, storing the identification (for example, domain name or IP address) of the unauthorized domain 40/45 within a database, sending a notification to the authorized domain 20 or operator thereof, sending a notification to a monitoring service 30 associated with the authorized domain 20, sending a notification to a website governance organization 60 or, because an unauthorized user may not be aware that the web material had been ripped, sending a notification to an unauthorized user 40/45, for example.

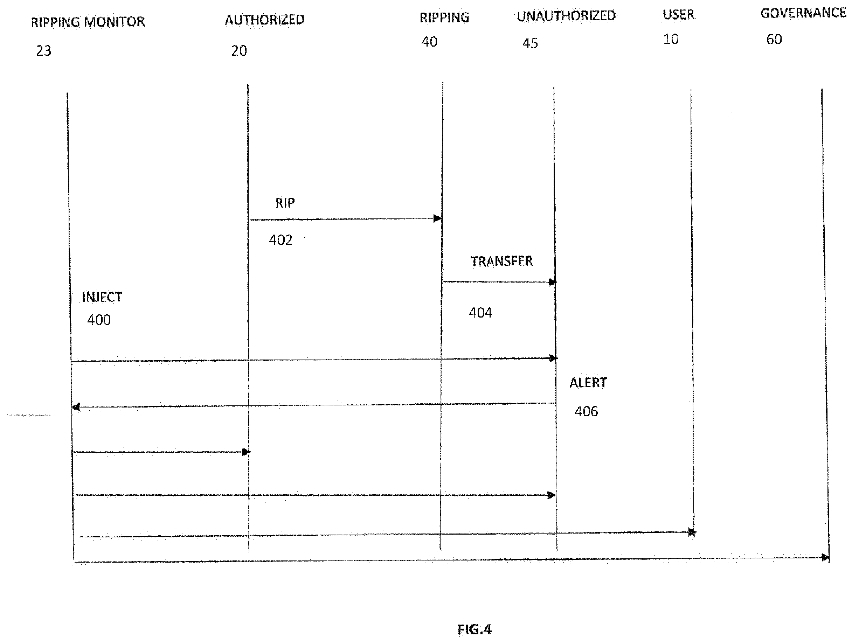

Referring to FIG. 4, provided is a sequential diagram of an example process in accordance with principles of inventive concepts in which a ripping monitor 23 employs the mechanism of monitoring an authorized website to detect any copying from the website and injecting an IFrame within a web page in response to such copying in order to detect the theft of website contents, to document such theft, and to provide notification of such theft. Injecting scripts in accordance with principles of inventive concepts may involve monitoring user interactions with a protected website and noting any form of copying. Whenever a copy event is detected the system may inject a unique tiny IFrame into the clipboard in a manner that renders it, the tiny IFrame, difficult to detect or remove. In example embodiments, when an unauthorized user downloads, or crawls, a webpage, a system in accordance with principles of inventive concepts may employ Javascript to detect the copying. In response to copying, the ripping monitor system inserts a TFrame link into the copied content. In this example embodiment, ripping monitor 23 and authorized server 20 are executed on the same server, allowing the ripping monitor to detect copying and to inject a TFrame into the content hosted on authorized server 20 upon the detection of copying.

As indicated by the sequence diagram, the process begins 402 with contents being ripped from an authorized server 20 by a ripping processor 40. The ripping processor then transfers the ripped content to unauthorized server 45 in step 404. When the ripping monitor 23 detects a copying event it injects an IFrame into the copied content, at the time of copying on authorized server 20. In example embodiments, in this method the Iframe is injected at the same time that the content is being copied, on the authorized server. That is, embodiments such as this, the ripping monitor and authorized server may be processes running on the same processor, so that the ripping monitor can inject the TFrame into the content of the authorized server as the content is being copied. Whenever a copier executes a copying action on a protected web page (by, for example, pressing Ctrl+C or right clicking and selecting), the ripping monitor may inject an IFrame (with TFrame link) into the copied content.

As previously indicated, with an IFrame being embedded within the website that is running on the authorized server 20 the IFrame, which contains a script for this purpose, determines whether it is operating on a different domain from the authorized domain. Again, the IFrame may be embedded by a ripping monitor 23 (as illustrated) or may be embedded by authorized server 20. When a ripping processor 40 rips content 402 from the website, by crawling for example, the content may be run 404 on ripping processor 40 or another, unauthorized processor 45 (as illustrated). The contents may be modified (for example, customized for operation on unauthorized processor 45) or not and the party operating unauthorized processor may or may not be aware of the contents' illicit origins.

In this example embodiment, when unauthorized processor 40/45 runs the content, the embedded one or more IFrame links containing small scripts determines whether the running domain is different from that of the authorized server and if the running domain is different from that of the protected website, the script may send an alert 406 that includes the domain upon which the ripped content (that is, website or portion thereof) is running. The alert may include, for example, storing the identification (for example, domain name or IP address) of the unauthorized domain within a database, sending a notification to the authorized domain 20 or operator thereof, sending a notification to a monitoring service 30 associated with the authorized domain, sending a notification to a website usage monitoring organization 60 or, because an unauthorized user may not be aware that the web material had been ripped, sending a notification to an unauthorized user 45.

In example embodiments, theft-related information (for example, ripping party's domain), may be encrypted for alerts/notifications, including notifications sent to a monitoring party's server. Rather than employing Ajax to send notifications to the monitoring party's server, the system may emulate an image request server to send the information. In this manner, the system avoids alerting the ripping party to the fact that his intrusion has been detected.

These examples are not meant to be exhaustive, other alerts and detection mechanisms are contemplated within the scope of inventive concepts.

It is intended by the following claims to claim that which is literally described and all equivalents thereto, including all modifications and variations that fall within the scope of each claim.

It is appreciated that certain features of inventive concepts, which are, for clarity, described in the context of separate embodiments, may also be provide in combination in a single embodiment. Conversely, various features of inventive concepts, which are, for brevity, described in the context of a single embodiment may also be provided separately or in any suitable sub-combination. For example, it will be appreciated that all of the features set out in any of the claims (whether independent or dependent) can combined in any given way.

Embodiments of the disclosure are set out in the following numbered clauses:
C1. A theft detection method, comprising:
   a processor including a mechanism within web content to determine whether the web content is operating is an authorized domain, the mechanism comprising executable computer program code;
   the mechanism determining an identification of the domain upon which the web content is operating; and
   the mechanism generating an alert if the domain in which the webpage is operating is an unauthorized domain instead of the authorized domain.
C2. The method of clause 1, wherein the mechanism is a script included in the webpage.
C3. The method of clause 1, including the processor embedding an IFrame tag including a TFrame link as at least a portion of the mechanism.
C4. The method of clause 1, including the processor detecting a copying of the content from the authorized domain and injecting a TFrame link into content that is copied as the mechanism.
C5. The method of clause 1, wherein generating the alert includes storing the identification of the unauthorized domain and/or a server associated with the unauthorized domain.
C6. The method of clause 1, wherein generating the alert includes automatically notifying a monitoring system of the identification of the unauthorized domain and/or a server associated with the unauthorized domain.
C7. The method of clause 1, wherein generating the alert includes notifying the authorized domain of the unauthorized domain.
C8. The method of clause 1, wherein generating the alert includes emulating an image request server.
C9. A website content theft detection system, comprising:
   a processor configured to include a mechanism within a webpage to determine whether the webpage is operating is an authorized domain;
   the mechanism configured to determine an identification of a domain within which the webpage is operating; and
   the mechanism configured to send an alert if the domain in which the webpage is operating is not the authorized domain, as an unauthorized domain.
C10. The system of clause 9, wherein the mechanism is a script included in the webpage.
C11. The system of clause 9, wherein the processor is configured to embed an IFrame tag to include a TFrame link as the mechanism.
C12. The system of clause 9, wherein the processor is configured to detect a copying of content from the web page and inject a TFrame link into content that is copied as the mechanism.
C13. The system of clause 9, wherein the system is configured to store the identification of the unauthorized domain and/or a server associated with the unauthorized domain.
C14. The system of clause 9, wherein the mechanism or the system are configured to notify a monitoring system of the identification of the unauthorized domain and/or a server associated with the unauthorized domain.
C15. The system of clause 9, wherein the mechanism is configured to notify the authorized domain of the identification of the unauthorized domain and/or a server associated with the unauthorized domain.
C16. The system of clause 9, wherein the script is configured to emulate the alert as an image request server.
C17. A website theft detection system, comprising:
   a processor authorized to host a website configured to host the website;
   the processor configured to employ Javascript to detect the copying of any content from the website; and
   the processor configured to inject a TFrame link into content that is copied in response to the detection of copying.
C18. The website theft detection system of clause 17, further comprising:
   a processor configured to include a script within a webpage to determine whether the webpage is operating is an authorized domain;
   the script configured to determine an identification of the server upon which the webpage is operating; and
   the script configured to send an alert if the domain in which the webpage is operating is not the authorized domain.
C19. The website theft detection system of clause 18, wherein the alert includes storing the identification of the domain associated with a processor that is not authorized to run the webpage and notifying a monitoring processor of the identification of the domain associated with a processor that is not authorized to run the webpage.
C20. The website theft detection system of clause 19, wherein the alert includes notifying server that is authorized to run the webpage of the identification of the domain associated with a processor that is not authorized to run the webpage and the alert is conducted through the emulation of an image request server.

## Claims

1. A theft detection method, comprising:
a processor including a mechanism within web content to determine whether the web content is operating is an authorized domain, the mechanism comprising executable computer program code;
the mechanism determining an identification of the domain upon which the web content is operating; and
the mechanism generating an alert if the domain in which the webpage is operating is an unauthorized domain instead of the authorized domain.

2. The method of claim 1, wherein the mechanism is a script included in the webpage.

3. The method of claim 1 or 2, including the processor embedding an IFrame tag including a TFrame link as at least a portion of the mechanism.

4. The method of any of the previous claims, including the processor detecting a copying of the content from the authorized domain and injecting a TFrame link into content that is copied as the mechanism.

5. The method of any of the previous claims, wherein generating the alert includes at least one of:
(i) storing the identification of the unauthorized domain and/or a server associated with the unauthorized domain;
(ii) automatically notifying a monitoring system of the identification of the unauthorized domain and/or a server associated with the unauthorized domain;
(iii) notifying the authorized domain of the unauthorized domain; and
(iv) emulating an image request server.

6. A website content theft detection system, comprising:
a processor configured to include a mechanism within a webpage to determine whether the webpage is operating in an authorized domain;
the mechanism configured to determine an identification of a domain within which the webpage is operating; and
the mechanism configured to send an alert if the domain in which the webpage is operating is not the authorized domain, as an unauthorized domain.

7. The system of claim 6, wherein the mechanism is a script included in the webpage.

8. The system of claim 6 or 7, wherein the processor is configured to at least one of:
(i) embed an IFrame tag to include a TFrame link as the mechanism; and
(ii) detect a copying of content from the web page and inject a TFrame link into content that is copied as the mechanism.

9. The system of any of claims 6 to 8, wherein the system is configured to store the identification of the unauthorized domain and/or a server associated with the unauthorized domain.

10. The system of any of claims 6 to 9, wherein the mechanism or the system are configured to notify a monitoring system of the identification of the unauthorized domain and/or a server associated with the unauthorized domain.

11. The system of any of claims 6 to 10, wherein the mechanism is configured to notify the authorized domain of the identification of the unauthorized domain and/or a server associated with the unauthorized domain.

12. The system of claim 7, or any claim as dependent thereon, wherein the script is configured to emulate the alert as an image request server.

13. The website theft detection system of claim 7, or any claim as dependent thereon, wherein the alert includes storing the identification of the domain associated with a processor that is not authorized to run the webpage and notifying a monitoring processor of the identification of the domain associated with a processor that is not authorized to run the webpage.

14. The website theft detection system of claim 13, wherein the alert includes notifying a server that is authorized to run the webpage of the identification of the domain associated with a processor that is not authorized to run the webpage and the alert is conducted through the emulation of an image request server.

15. A computer program comprising instructions which, when the program is executed by a computer, cause the computer to carry out the method of any of claims 1 to 5.
